# EUROPEAN PATENT SPECIFICATION

(11) **EP 3 670 217 B1**
(45) Date of publication and mention of the grant of the patent: **24.11.2021**
(21) Application number: 19217814.3
(22) Date of filing: 19.12.2019
(51) Int. Cl.: B60G 9/02

(54) **IMPROVED LINKAGE FOR AN AXLE OF A VEHICLE**
VERBESSERTES GESTÄNGE FÜR EINE FAHRZEUGACHSE
LIAISON AMÉLIORÉE POUR UN ESSIEU DE VÉHICULE

(30) Priority: 20.12.2018 IT 201800020440
(43) Date of publication of application: 24.06.2020
(73) Proprietor: CNH Industrial Italia S.p.A., 10135 Torino (IT)
(72) Inventor: Paolini, Francesco, 41122 Modena (IT)
(74) Representative: CNH Industrial IP Department

(56) References cited:
- EP-A1- 2 269 847
- EP-A2- 1 972 471
- EP-A2- 1 997 654
- GB-A- 1 157 081
- JP-A- H05 286 322
- JP-U- S57 148 509
- US-A- 1 205 612
- US-A1- 2004 056 398

## Description

### TECHNICAL FIELD

The present invention concerns an improved linkage for an axle of a vehicle, in particular a linkage for a front axle of an off-road vehicle such as a specialty agricultural vehicle.

### BACKGROUND OF THE INVENTION

Off road vehicles such as agricultural vehicles and furthermore specialty vehicles, i.e. vehicles that are designed to serve a professional purpose e.g. for use in vineyard, need to have a front axle which may roll around a longitudinal axis of the vehicle, perpendicular to longitudinal axis of the front axle.

In particular, in order to allow the greater possible roll around a hinge point of the axle with chassis of the vehicle, it is needed that such point is the highest possible above the axle.

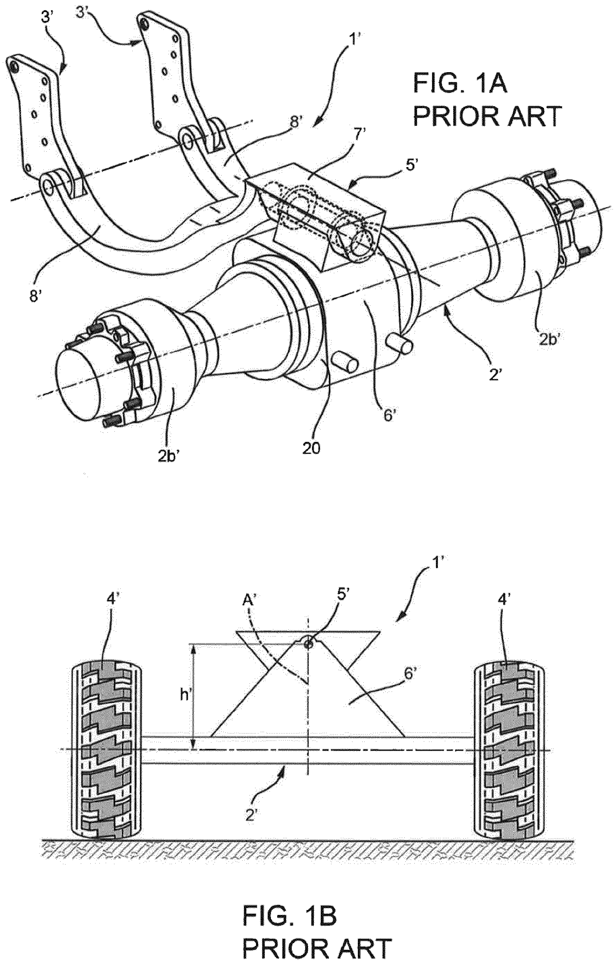

Making reference to figures 1A and 1B, it is disclosed a known linkage system 1' for connecting a front axle 2' of a specialty vehicle, not disclosed, to a chassis 3' thereof. As known, axle 2' comprises a main longitudinal portion 2a' and a pair of extremities 2b' configured to allow the connection of respective wheels 4' of the vehicle.

In particular, linkage system 1' comprises a hinge 5' realized between a protruding portion 6' extending from main portion 2a' and an intermediate element 7' carried by chassis 3'. In particular, hinge 5' is realized along a vertical axis A' which is perpendicular to and passes symmetrically with respect to axle 2'.

Protruding portion 6' extends along vertical axis A from axle 2 so as to define axis A' at a distance h' which is usually comprised from 0 mm to about half of the track width above axle 2'.

Intermediate element 7' may be a plate carried fixedly or, as shown in figure 1A, movably carried to chassis 3' thereby allowing a pitch movement of this latter, and consequently of axle 2, which respect to chassis 3.

However, the above described configuration has the drawback that protruding portion 6' is cumbersome and during movement of axle 2' limits the free rolling of this latter.

Therefore, as long as distance h' is higher, roll of axle 2' is improved but encumbrance of protruding portion 6' increases thereby reducing free space over axle 2', limiting angular roll movement of axle 2' and increasing weight and costs for manufacturing this latter. JPS57148509 U describes a linkage system for connecting an axle of an off-road vehicle to a chassis but without providing so many free angular roll movement. JPS57148509U discloses the preamble of claim 1. GB 1 157 081, US 2004/056398, EP 2 269 847 and EP 1 997 654 disclose other linkage systems.

Therefore, the need is felt to improve known existing linkage system for a front axle of an agricultural vehicle to increase free angular roll movement while decreasing costs and encumbrances of known systems.

An aim of the present invention is to satisfy the above mentioned needs.

### SUMMARY OF THE INVENTION

The aforementioned aim is reached by a as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1A is a perspective view of an axle of a vehicle connected to a chassis of the vehicle via a linkage system as known in the prior art;
- Figure 1B is a schematic front view of the axle of figure 1A;
- Figure 2 is a perspective view of an axle of a vehicle connected to a chassis of the vehicle via a linkage system according to the invention;
- Figure 3 is a lateral view of the axle of figure 2;
- Figure 4 is a schematic front view of the axle of figure 2 in a neutral position;
- Figure 5A and 5B are schematic front views of different operative conditions of the axle of figure 2.

### DETAILED DESCRIPTION OF THE INVENTION

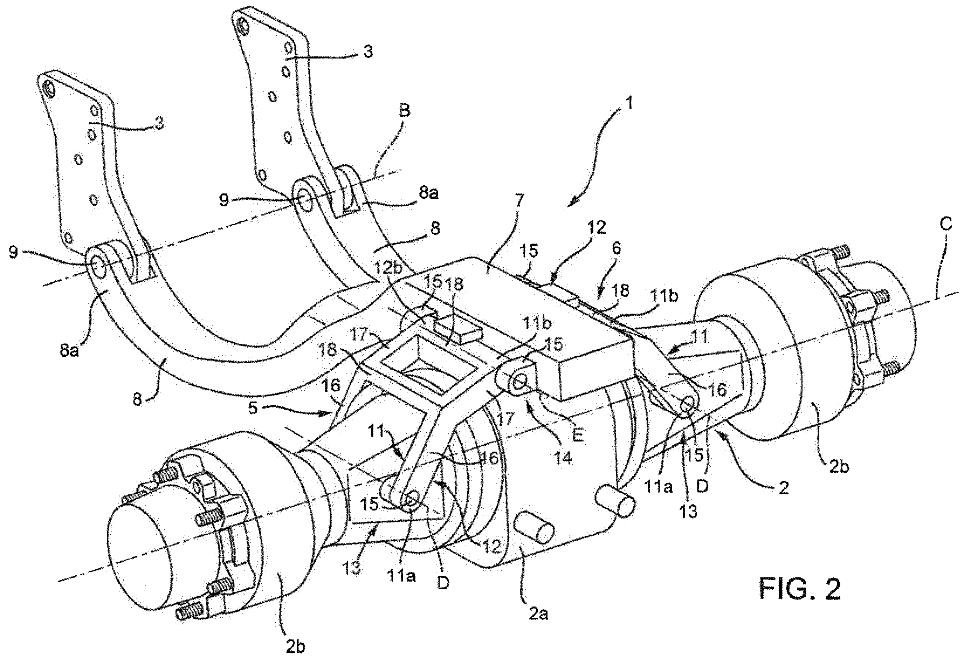

Making reference to figures 2 to 4, it is disclosed a linkage system 1 according to the invention for connecting a front axle 2 of a specialty vehicle, not disclosed, to a chassis 3 thereof.

As known, axle 2 comprises a main longitudinal portion 2a and a pair of extremities 2b configured to allow the connection of respective wheels 4 of the vehicle.

According to the invention, linkage system 1 comprise at least a pair of left and right connection elements 5, 6 connecting main portion 2a of axle 2 with an intermediate element 7 carried by chassis 3. More precisely, each connection elements 5, 6 defines a lower movable connection 13 with main portion 2a of axle 2 and an upper movable connection 14 with intermediate plate 7, as described in the following.

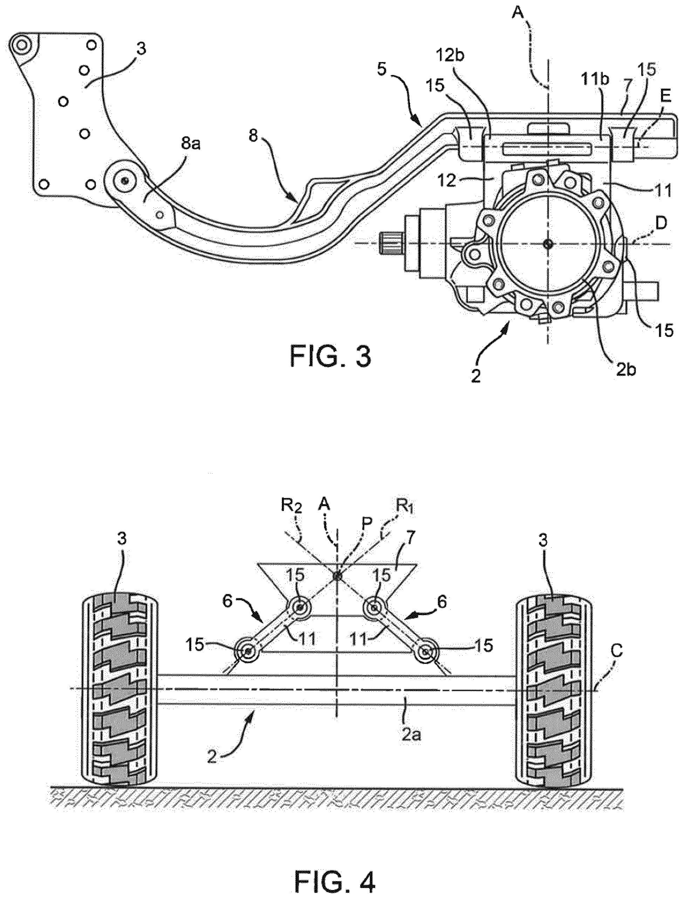

Intermediate element 7 is movably connected to chassis 3. According to the particular configuration disclosed in figures 2 and 3, intermediate element 7 is substantially a plate element movably carried by chassis 3 via a pair of legs 8, preferably realized monolithically with intermediate element 7.

Legs 8 have a substantial arcuate shape, when seen from a lateral side (see figure 3), with the convex portion directed towards ground, so as to allow insertion of suspension elements in the free space defined by concave portion of these latter. Movable connection is realized by respective hinges 9 between a free terminal portion 8a of legs 8 and chassis 3. Hinges 9 defines a horizontal axis B around which intermediate element 7, and consequently axle 2, may have a pitch movement.

Making reference for sake of simplicity to element 5, it may be realized to comprise a first and a second legs 11, 12 equally laterally spaced apart from a longitudinal axis C of axle 2. Each leg 11, 12 defines the lower movable connection 13 between a lower extremity 11a, 12a of leg 11, 12 with main portion 2a of axle 2 and the upper movable connection 14 between an upper extremity 11b, 12b of leg 11, 12 with intermediate element 7.

According to the invention, lower and upper movable connections 13, 14 are hinges 15 and lower hinges 15 are coaxially around an axis D parallel to longitudinal axis of the vehicle (not shown) and upper hinges 15 are coaxially around an axis E parallel to longitudinal axis of the vehicle (not shown).

Preferably legs 11 and 12 each comprise essentially two segments 16, 17 connected to each other, a first, lower, segment 16 carrying lower extremity 11a, 12a of each leg 11, 12 and a second, upper, segment 17 carrying upper extremity 11b, 12b of each leg 11, 12. Lower and upper segments 16, 17 are preferably realized as one piece and may be inclined with respect to each other to define a convex angle directed towards ground.

Further, legs 11, 12 are preferably connected thanks to a plurality, e.g. two in the described case, transversal members 18 extending parallel to axis D, E between legs 11 and 12. Preferably transversal members 18 are perpendicular to legs 11 and 12 and are realized as one piece with these latter. More preferably, one of such transversal members 18 is realized in the connection points between lower and upper segments 17, 18.

Preferably the elements comprised by connection elements 5, 6, i.e. legs 11, 12, segments 16, 17 and transversal members 18 are rods, as said, preferably realized together as one piece. Furthermore, connection elements 5, 6 and intermediate element 7 are realized in metallic material, such as gray iron, steel or high strength steels.

Connection elements 5, 6 are advantageously realized symmetrically about an axis A of symmetry of the linkage system/vehicle which is perpendicular to longitudinal axis C of the axle 2 and passing in the middle of its length. Consequently, the same above described configuration for left connection element 5 is the same for right connection element 6.

According to an aspect of the invention, lower and upper hinges 15 of each right and left connection elements 5, 6 defines respectively straight lines R₁, R₂ in a plane perpendicular to longitudinal axis C of axle 2 and passing from axis A, see front view depicted in figure 4. In particular left hinges 15 define a first straight line R₁ passing through pivoting points positioned on axis D, E of left lower and upper hinges 15 and define a second straight line R₂ passing through pivoting points positioned on axis D, E of right lower and upper hinges 15.

Lines R₁, R₂ are inclined with respect to axis A and C and converge into a point P which is positioned above the intermediate element 7. In particular point P is positioned on axis A at a distance h comprised between 20 and 500 mm above axle 2; further, point P is laterally comprised between the position of two upper hinges 15.

According to the cinematic of the above described configuration, P point is a virtual pivoting point of the roll motion of axle 2.The operation of the linkage system 1 described above is the following.

According to a neutral position of axle 2, point P is positioned in the above described neutral position in which it is position of axis A.

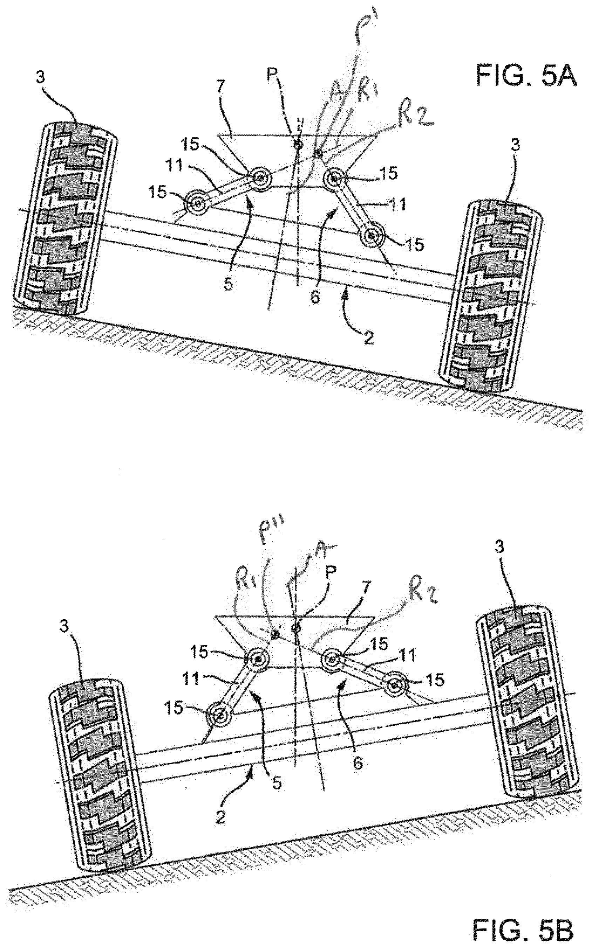

In a first operating condition, e.g. as shown in figure 5A in which left terminal portion 2b of axle 2 is pushed up, so-called axle swing, e.g. by road asperities, right R₁ defined by hinges 15 of left connection element 5 will decrease its inclination angle with respect to axis C while right R₂ defined by hinges 15 of right connection element 6 will increase its inclination angle with respect to axis C and points P defined by such rights R₁, R₂ will shift right in a position P' with respect to neutral positon P and axis 2 will roll around point P.

In a second operating condition, e.g. as shown in figure 5B in which right portion of axle 2 is pushed up, e.g. by road asperities, right R₁ defined by hinges 15 of right connection element 6 will decrease its inclination angle with respect to axis C while right R₂ defined by hinges 15 of left with respect to axis C and points P defined by these rights R₁, R₂ will shift left in a position P" with respect to neutral positon P and axis 2 will roll around point P.

In view of the foregoing, the advantages of a linkage system 1 according to the invention are apparent.

Thanks to a virtual pivoting point P which allows roll movement of axle 2 positioned above intermediate element 7, it is possible to achieve a huge roll movement. At the same time, it is possible to achieve a great space saving above axle 2 and a compact linkage system 1 since there is not the necessity to provide a physical support for such pivoting point P, which is virtual.

The fact that point P moves according to geometry defined by hinges 15 of right and left connection elements 5, 6 allows a more flexible configuration in which it is avoided a possible collision with tire envelope and vehicle body during steering.

Moreover, by changing geometry of legs 11, 12 it is possible to vary the position, i.e. height h, of virtual point P, thereby allowing the linkage system 1 to be used for multiple different typology of vehicles, increasing its versatility.

Furthermore, linkage system 1 increases stiffness and consequently improves handling and ride of the vehicle.

If intermediate element is connected to chassis 2 via legs 8, the ground following capability of the vehicle is further improved and accordingly vehicle ride quality perception.

It is clear that modifications can be made to the described linkage system 1 which do not extend beyond the scope of protection defined by the claims.

For example, shape and number of legs 11, 12 may vary provided that the effect of providing a virtual point P over intermediate element 7 is present.

Furthermore, as said, intermediate element 7 may be carried in movable manner by chassis 3, as shown and described via leg 8.

As also stated, transversal members 18 may be absent or have a different shape, such as upper and lower segments 16 and 17.

## Claims

1. Linkage system (1) for connecting an axle (2) of an off-road vehicle to a chassis (3) thereof, said linkage system (1) comprising a left and a right connection elements (5, 6) defining respectively a lower movable connection (13) with said axle (2) and an upper movable connection (14) with an intermediate element (7) carried by said chassis (3), said upper and lower connections (13, 14) of each left and right connection elements (5, 6) being aligned along a respective straight line (R1, R2), said lines intersecting on a point (P), positioned above said intermediate element (7), said point (P) being a virtual pivoting point of roll movement of said axle (2),
wherein said movable connections (13, 14) are lower and upper hinges (15),
wherein said lower hinges (15) allows a rotation around an axis (D) perpendicular to a longitudinal axis (C) of said axle (2) and parallel to a longitudinal axis of said vehicle, and said upper hinges (15) allows a rotation around an axis (E) perpendicular to a longitudinal axle (C) of said axle (2) and parallel to a longitudinal axis of said vehicle, **characterised in that** said
intermediate element (7) is carried by said chassis (3) in a movable manner and wherein said movable manner connection of said intermediate element (7) with said chassis (3) allows a pitch rotation of said intermediate element around a pivoting axis (B) parallel to a longitudinal axis (C) of said axle (2).

2. Linkage system according to any of the preceding claims, wherein said point (P) moves in function of the roll movement of said axle (2).

3. Linkage system according to any of the preceding claims, wherein said point (P) is positioned on a symmetry axis (A) of said axle (2) at a distance comprised between 20 mm and 500 mm above said axle (2).

4. Linkage system according to any of the preceding claims, wherein said intermediate element (7) is fixedly carried by said chassis (3).

5. Linkage system according to any of the preceding claims, wherein said left and right connection elements (5, 6) each comprises at least a pair of legs (11, 12) comprising a first extremity (11a,12a) defining said lower mobile connection (13) with said axle (2) and a second extremity (11b,12b) defining said upper mobile connection (14) with said intermediate element (7).

6. Linkage system according to claim 5, wherein each of said legs (11, 12) comprises a first segment (16) and a second segment (17) connected to each other, said first and second segment (16, 17) being inclined to each other defining a convex angle directed toward ground.

7. Linkage system according to claim 5 or 6, wherein said left and right connection elements (5, 6) further comprise at least a transversal member (18) connecting said at least a pair of legs (11, 12) .

8. Linkage system according to claim 7, wherein said at least a pair of legs (11, 12) and said at least transversal member (18) are realized as one piece.

9. Agricultural vehicle comprising a chassis (3) and a front axle (2) connected to said chassis (3) by a linkage system (1) according to any of the preceding claims.

## Patentansprüche

1. Gestängesystem (1) zum Verbinden einer Achse (2) eines Geländefahrzeugs mit dessen Fahrgestell (3), wobei das Gestängesystem (1) ein linkes (5) und ein rechtes (6) Verbindungselement aufweist, die jeweils eine untere bewegbare Verbindung (13) mit der Achse (2) und eine obere bewegbare Verbindung (14) mit einem Zwischenelement (7) definieren, das von dem Fahrgestell (3) getragen wird, wobei die untere und obere Verbindung (13, 14) von jedem linken und rechten Verbindungselement (5, 6) entlang einer entsprechenden geraden Linie (R1, R2) ausgerichtet ist, wobei die Linien sich in einem Punkt (P) schneiden, der oberhalb des Zwischenelements (7) angeordnet ist, wobei der Punkt (P) ein virtueller Schwenkpunkt der Rollbewegung der Achse ist,
wobei die bewegbaren Verbindungen (13, 14) untere und obere Gelenke (15) sind,
wobei das untere Gelenk (15) eine Drehung um eine Achse (D) senkrecht zu einer Längsachse (C) der Achse (2) und parallel zu einer Fahrzeuglängsachse ermöglicht, und wobei das obere Gelenk (15) eine Drehung um eine Achse (E) senkrecht zu einer Längsachse (C) der Achse (2) und parallel zu einer Fahrzeuglängsachse ermöglicht,
**dadurch gekennzeichnet, dass**
das Zwischenelement (7) von dem Fahrgestell (3) in eine bewegbaren Art und Weise getragen wird und wobei die bewegbare Art der Verbindung des Zwischenelements (7) mit dem Fahrgestell (3) eine Stampfdrehung (engl. pitch rotation) des Zwischenelements um eine Drehachse (B) parallel zu einer Längsachse (C) der Achse (2) ermöglicht.

2. Gestängesystem nach einem der vorhergehenden Ansprüche, wobei der Punkt (P) sich als eine Funktion der Rollbewegung der Achse (2) bewegt.

3. Gestängesystem nach einem der vorhergehenden Ansprüche, wobei der Punkt (P) auf einer Symmetrieachse (A) der Achse (2) in einem Abstand angeordnet ist, der zwischen 20 mm und 500 mm über der Achse (2) umfasst.

4. Gestängesystem nach einem der vorhergehenden Ansprüche, wobei das Zwischenelement (7) fest von dem Fahrgestell (3) getragen ist.

5. Gestängesystem nach einem der vorhergehenden Ansprüche, wobei das linke und rechte Verbindungselement (5, 6) jeweils mindestens ein Paar von Füßen (11, 12) aufweist, die eine erste Extremität (11a, 12 a), die die untere bewegbare Verbindung (13) mit der Achse (2) definiert, und eine zweite Extremität (11 b, 12 b) aufweisen, die die obere bewegbare Verbindung (14) mit dem Zwischenelement (7) definiert.

6. Gestängesystem nach Anspruch 5, wobei jeder der Füße (11, 12) ein erstes Segment (16) und ein zweites Segment (17) aufweist, die miteinander verbunden sind, wobei das erste und das zweite Segment (16, 17) zueinander geneigt sind, wobei sie einen konvexen Winkel definieren, der zum Boden gerichtet ist.

7. Gestängesystem nach Anspruch 5 oder 6, wobei das linke und das rechte Verbindungselement (5, 6) des Weiteren mindestens ein Querelement (18) aufweisen, die das mindestens eine Paar von Füßen (11, 12) verbinden.

8. Gestängesystem nach Anspruch 7, wobei das mindestens eine Paar von Füßen (11, 12) und das mindestens eine Querelement (18) einstückig ausgebildet sind.

9. Landwirtschaftliches Fahrzeug mit einem Fahrgestell (3) und einer Vorderachse (2), die mit dem Fahrgestell (3) durch ein Gestängesystem (1) nach einem der vorhergehenden Ansprüche verbunden ist.

## Revendications

1. Système de couplage (1) destiné à relier un essieu (2) d'un véhicule tout-terrain à un châssis (3) de celui-ci, ledit système de couplage (1) comprenant des éléments de raccordement gauche et droit (5, 6) définissant respectivement un raccordement mobile inférieur (13) avec ledit essieu (2) et un raccordement mobile supérieur (14) avec un élément intermédiaire (7) supporté par ledit châssis (3), lesdits raccordements supérieur et inférieur (13, 14) de chaque élément de raccordement gauche et droit (5, 6) étant alignés le long d'une ligne droite respective (R1, R2), lesdites lignes se croisant en un point (P), positionnées au-dessus dudit élément intermédiaire (7), ledit point (P) étant un point de pivotement virtuel du mouvement de roulis dudit essieu (2),
dans lequel lesdits raccordements mobiles (13, 14) sont des charnières inférieures et supérieures (15),
dans lequel lesdites charnières inférieures (15) permettent une rotation autour d'un axe (D) perpendiculaire à un axe longitudinal (C) dudit essieu (2) et parallèle à un axe longitudinal dudit véhicule, et lesdites charnières supérieures (15) permettent une rotation autour d'un axe (E) perpendiculaire à un axe longitudinal (C) dudit essieu (2) et parallèle à un axe longitudinal dudit véhicule,
**caractérisé en ce que**
ledit élément intermédiaire (7) est supporté par ledit châssis (3) de manière mobile et dans lequel ledit raccordement mobile dudit élément intermédiaire (7) avec ledit châssis (3) permet un tangage dudit élément intermédiaire autour d'un axe de pivotement (B) parallèle à un axe longitudinal (C) dudit essieu (2).

2. Système de couplage selon l'une quelconque des revendications précédentes, dans lequel ledit point (P) se déplace en fonction du mouvement de roulis dudit essieu (2).

3. Système de couplage selon l'une quelconque des revendications précédentes, dans lequel ledit point (P) est positionné sur un axe de symétrie (A) dudit essieu (2) à une distance comprise entre 20 mm et 500 mm au-dessus dudit essieu (2).

4. Système de couplage selon l'une quelconque des revendications précédentes, dans lequel ledit élément intermédiaire (7) est supporté de manière fixe par ledit châssis (3).

5. Système de couplage selon l'une quelconque des revendications précédentes, dans lequel lesdits éléments de raccordement gauche et droit (5, 6) comprennent chacun au moins une paire de jambes (11, 12) comprenant une première extrémité (11a, 12a) définissant ledit raccordement mobile inférieur (13) avec ledit essieu (2) et une deuxième extrémité (11b, 12b) définissant ledit raccordement mobile supérieur (14) avec ledit élément intermédiaire (7).

6. Système de couplage selon la revendication 5, dans lequel chacune desdites jambes (11, 12) comprend un premier segment (16) et un deuxième segment (17) reliés l'un à l'autre, lesdits premier et deuxième segments (16, 17) étant inclinés l'un par rapport à l'autre définissant un angle convexe dirigé vers le sol.

7. Système de couplage selon la revendication 5 ou 6, dans lequel lesdits éléments de raccordement gauche et droit (5, 6) comprennent en outre au moins un élément transversal (18) reliant ladite au moins une paire de jambes (11, 12).

8. Système de couplage selon la revendication 7, dans lequel ladite au moins une paire de jambes (11, 12) et ledit au moins un élément transversal (18) forment une seule pièce.

9. Véhicule agricole comprenant un châssis (3) et un essieu avant (2) relié audit châssis (3) par un système de couplage (1) selon l'une quelconque des revendications précédentes.
